# EUROPEAN PATENT APPLICATION

(11) **EP 4 748 468 A1**
(43) Date of publication of application: **27.05.2026**
(21) Application number: 24849356.1
(22) Date of filing: 13.06.2024
(51) Int. Cl.: B01D 35/30, B01D 35/147, B01D 39/20

(54) **WATER TREATMENT APPARATUS**

(30) Priority: 02.08.2023 KR 20230101183
(71) Applicant: LG Electronics Inc., Yeongdeungpo-gu Seoul 07336 (KR)
(72) Inventor: KIM, Youngjae, Seoul 08592 (KR); JEONG, Soongy, Seoul 08592 (KR)
(74) Representative: Ter Meer Steinmeister & Partner
(86) International application number: PCT/KR2024/008137
(87) International publication number: WO 2025/028785

(57) **Abstract**

The present invention relates to a water treatment apparatus comprising: a filter socket having an inlet formed on one side with respect to a first direction, an outlet formed on the other side, and a filter coupling port formed in a second direction perpendicular to the first direction; a filter housing that forms a filtering space therein; a filter head coupled to an upper side of the filter housing and inserted into the filter coupling port in the second direction; and a flow path switching member accommodated between the inlet and outlet of the filter socket and rotating about the second direction.

## Description

### Technical Field

The present disclosure relates to a water treatment apparatus capable of simultaneously replacing a filter head when replacing a filter.

### Background Art

Water dispensing apparatus, such as water purifiers and refrigerators, purify raw water, such as tap water or groundwater. In other words, they are apparatus that convert raw water into potable water through various purification methods.

To produce purified water, processes such as sedimentation, filtration, and sterilization may be used, and it is common for harmful substances to be removed through these processes.

Typically, water dispensing apparatus may be equipped with various filters to purify raw water. These filters can be categorized by function into sediment filters, activated carbon filters, UF hollow fiber membrane filters, and RO membrane filters.

The sediment filter can be said to be a filter for settling large particle contaminants or floating substances in raw water, and the activated carbon filter can be said to be a filter for removing small particle contaminants, residual chlorine, volatile organic compounds, or odor-causing factors by adsorbing them.

In addition, the activated carbon filter may generally be equipped with two filters. In other words, the activated carbon filter may be equipped with a pre-activated carbon filter equipped on the raw water side and a post-activated carbon filter equipped on the purified water side. The post-activated carbon filter may be equipped primarily to improve the taste of water by removing odor-causing substances that affect the taste of purified water.

Additionally, it is common for UF hollow fiber membrane filters and RO membrane filters to be used selectively.
<Prior Document 1: 10-2016-0034309>
<Prior Document 2: 10-2016-0037995>

In the case of prior documents 1 and 2, a water treatment apparatus equipped with a replaceable filter is disclosed.

In the case of the prior art according to prior art documents 1 and 2, when the filter is removed, a large area of the flow path is formed that is exposed to the outside, and thus, there is a high possibility that external foreign substances will be introduced.

Additionally, as the flow path area exposed to the outside increases, the space where water remains also increases, which can cause discoloration due to water stains and create an aesthetically undesirable appearance.

In addition, since there is no separate filter removal prevention structure, there is a problem that may occur when the filter is removed during movement or storage.

In addition, in the conventional case, as the number of parts installed in the center of the filter head through which water flows, such as shafts, increases, resistance to the flow of water increases, which causes problems such as water leakage or a decrease in the processing flow rate.

In addition, since a structure that holds the filter so that the filter does not separate from the filter head is not applied, there was a problem in which the filter head and filter housing were separated when the filter head was separated from the filter socket or when the filter head was mounted in the filter socket.

### Disclosure

### Technical Problem

The present disclosure proposes a water treatment apparatus in which, when replacing a filter, the filter can be installed simply by fitting and rotating the filter, and, conversely, the filter can be removed simply by rotating and removing the filter, thereby reducing the difficulty of the work required for filter replacement, and thus enabling a user to directly replace the filter when necessary.

In addition, a water treatment apparatus is proposed that can reduce the resistance of the flow path, increase the treatment flow rate, and reduce the risk of leakage by reducing the number of parts such as shafts disposed in the water flow path.

In addition, a water treatment apparatus is proposed in which water that has introduced the filter socket can be bypassed and then discharged without leaking when replacing the filter.

### Technical Solution

The present disclosure to solve the above problem includes a filter socket having an introduction port formed on one side, a discharge port formed on the other side relative to a first direction, and a filter coupling port formed in a second direction perpendicular to the first direction; a filter housing configured to form a filtration space therein; a filter head coupled to the upper side of the filter housing and inserted into the filter coupling port in the second direction; a flow path switching member accommodated between the introduction port and the discharge port of the filter socket and rotating about the second direction as an axis.

The flow path switching member includes a bypass flow path configured to guide water introduced into the introduction port to the discharge port in a first state where the filter head is inserted into the filter coupling port; a water introduction flow path configured to guide water introduced into the introduction port to the filter head and a filter housing in a second state where the filter head is rotated by a predetermined angle relative to the first state; and a water discharge flow path configured to guide water from the filter housing and the filter head to the discharge port.

The filter head includes a water introduction pipe extending in the second direction and configured to communicate with the water introduction flow path, and a water discharge pipe extending in the second direction and formed parallel to the water introduction pipe and configured to communicate the water discharge flow path.

The water introduction flow path, in the second state, includes a first inlet configured to communicate with the introduction port and a first outlet configured to communicate with the water introduction pipe, and the water discharge flow path, in the second state, includes a second inlet configured to communicate with the water discharge pipe and a second outlet configured to communicate with the discharge port.

The first inlet and the first outlet are formed in an intersecting direction, and the second inlet and the second outlet are also formed in an intersecting direction.

The bypass flow path, in the first state, includes a third inlet configured to communicate with the introduction port and a third outlet configured to communicate with the discharge port.

An intermediate flow path configured to bypass the water introduction flow path and the water discharge flow path is formed between the third inlet and the third outlet.

Extension directions of the water introduction flow path and the water discharge flow path and an extension direction of the bypass flow path are perpendicular to each other.

The filter socket forms an intermediate wall dividing the water introduction flow path and the water discharge flow path, and the bypass flow path is formed to pass through an upper side of the intermediate wall.

The filter socket has an upper opening formed by an open upper side, and the filter socket further includes an upper cover configured to cover the upper opening.

The upper cover has a rotation limiting protrusion formed on a lower surface thereof that protrudes downward, and a stopper is formed on the upper side of the flow path switching member to engage and restrain both end portions of the rotation limiting protrusion when the flow path switching member rotates.

The rotation limiting protrusion is provided in an arc shape, and the rotational motion of the flow path switching member is limited between both end portions of the rotation limiting protrusion.

The water treatment apparatus further includes a first connection member configured to connect the water introduction pipe to the water introduction flow path and to connect the water discharge pipe to the water discharge flow path, between the flow path switching member and the filter socket.

The first connection member has a first protrusion part and a second protrusion part formed on the upper side, each of which are inserted into the water introduction flow path and the water discharge flow path.

The first connection member forms a first connection port and a second connection port through which the water introduction pipe and the water discharge pipe pass, respectively.

The water treatment apparatus further includes a second connection member configured to secure the first connection member to the flow path switching member and the filter socket.

In the second connection member, an accommodation groove into which the first connection member is inserted is formed concavely from the upper side to the lower side.

A third connection port and a fourth connection port are formed on the bottom surface of the accommodation groove through which the water introduction pipe and the water discharge pipe pass, respectively.

The flow path switching member has a plurality of fixing protrusions protruding downward, and the second connection member has a plurality of fixing grooves formed concavely from the upper side to the lower side into which the fixing protrusions are inserted.

The filter head forms a protrusion part protruding upward, and the second connection member has a groove part formed on a lower surface thereof into which the protrusion part is inserted.

The water treatment apparatus further includes a fixed cover having a ring shape with one side open and covering an outer peripheral surface of the filter head.

At least one fixing hook is formed on an inner peripheral surface of the fixing cover, and a hook groove into which the fixing hook is inserted is formed in the filter head.

### Advantageous Effect

According to the present disclosure, when installing a filter, the filter can be installed simply by fitting the filter head into the filter socket and turning it to one side, so that installation and replacement of the filter are easy, and the user can install and replace the filter directly.

In addition, when separating the filter, the filter can be separated by simply turning the filter head to the other side and removing the filter head from the filter socket, making it easy to separate and replace the filter, and the user can separate and replace the filter directly.

Above all, when the filter is separated, the flow path inside the filter socket is switched to a bypass mode, so that water introduced into the introduction port of the filter socket flows through the bypass flow path and out the discharge port of the filter socket, which has the advantage of preventing water leakage.

In addition, when the filter is installed in this state, the flow path inside the filter socket is automatically switched to the purification mode, so that water introduced into the introduction port of the filter socket passes through the filter and then is discharged through the discharge port of the filter socket, which has the advantage of producing purified water.

Furthermore, according to the present disclosure, the area of the filter flow path exposed to the outside can be minimized during filter storage or filter replacement. Furthermore, by reducing the area of the filter flow path exposed to the outside, external foreign substances are prevented from being introduced the inside of the filter, resulting in the advantage of preventing contamination of the filter.

In addition, the volume of the filter flow path exposed to the outside can be reduced, minimizing the amount of water remaining in the filter flow path, thereby minimizing the occurrence of water stains, sedimentation, or the like.

In addition, according to the present disclosure, since the fixed cover covers the outside of the filter head without shaking when the filter head and the filter cap are coupled, the area of the filter head exposed to the outside is minimized, and the state where the filter head and the filter cap are coupled can be firmly maintained.

In addition, during the process of storing and moving the filter, removal of the filter head and filter cap can be prevented, and during the process of using the filter, removal of the filter head and filter cap can be prevented, thereby preventing problems such as leakage.

### Description of Drawings

FIG. 1 is a perspective view illustrating a water treatment apparatus according to one embodiment of the present disclosure.
FIG. 2 is a perspective view illustrating a state where the position of the water discharge nozzle of the water treatment apparatus has been changed, in FIG. 1.
FIG. 3 is a perspective view illustrating a state where the fixed cover and top cover are separated, in FIG. 1.
FIG. 4 is a perspective view illustrating a state where the fixed cover is rotated to one side, in FIG. 1.
FIG. 5 is a perspective view illustrating the fixed cover in FIG. 1 rotated to the other side.
FIG. 6 is a drawing illustrating a state where the front panel is separated, in FIG. 1.
FIG. 7 is a front view illustrating a state where the filter and filter socket, which are components of the present disclosure, are coupled.
FIG. 8 is a front view illustrating a state where the filter and filter socket, which are components of the present disclosure, are separated.
FIG. 9 is a front view illustrating a state where the filter socket and filter head, which are components of the present disclosure, are separated.
FIG. 10 is a cross-sectional view illustrating a state where the filter and the filter socket are coupled in the second state.
FIG. 11 is a cross-sectional view illustrating the coupled appearance of the filter and the filter socket in the first state.
FIG. 12 is a perspective view illustrating a filter head, which is a component of the present disclosure.
FIG. 13 is a side view illustrating the filter head.
FIG. 14 is a front view illustrating the filter head.
FIG. 15 is a plan view illustrating the filter head.
FIG. 16 is a perspective view illustrating a filter socket, which is a component of the present disclosure.
FIG. 17 is a side view illustrating the filter socket.
FIG. 18 is a front view illustrating the filter socket.
FIG. 19 is a perspective view illustrating a flow path switching member, which is a component of the present disclosure.
FIG. 20 is a side view illustrating the flow path switching member.
FIG. 21 is a bottom view illustrating the Flow path switching member.
FIG. 22 is a perspective view illustrating the upper cover, which is a component of the present disclosure.
FIG. 23 is a side view illustrating the upper cover.
FIG. 24 is a bottom view illustrating the upper cover.
FIG. 25 is a perspective view illustrating the first connection member, which is a component of the present disclosure.
FIG. 26 is a bottom view illustrating the first connection member.
FIG. 27 is a perspective view illustrating a second connection member, which is a component of the present disclosure.
FIG. 28 is a plan view illustrating the second connection member.
FIG. 29 is a bottom view illustrating the second connection member.
FIG. 30 is a front view illustrating a state where a filter cap and a filter head, which are components of the present disclosure, are coupled.
FIG. 31 is a plan view illustrating a fixed cover, which is a component of the present disclosure.
FIG. 32 is a perspective view illustrating the fixed cover.
FIG. 33 is a cross-sectional view illustrating a state where the fixed cover is coupled with the filter head and filter cap.

### Best Mode

Hereinafter, specific embodiments of the present disclosure will be described in detail with reference to the drawings. However, the idea of the present disclosure is not limited to the embodiments presented below, and those skilled in the art who understand the idea of the present disclosure will be able to easily implement other embodiments within the scope of the same idea by adding, modifying, deleting, or adding components, and such embodiments will also be considered to be within the scope of the idea of the present disclosure.

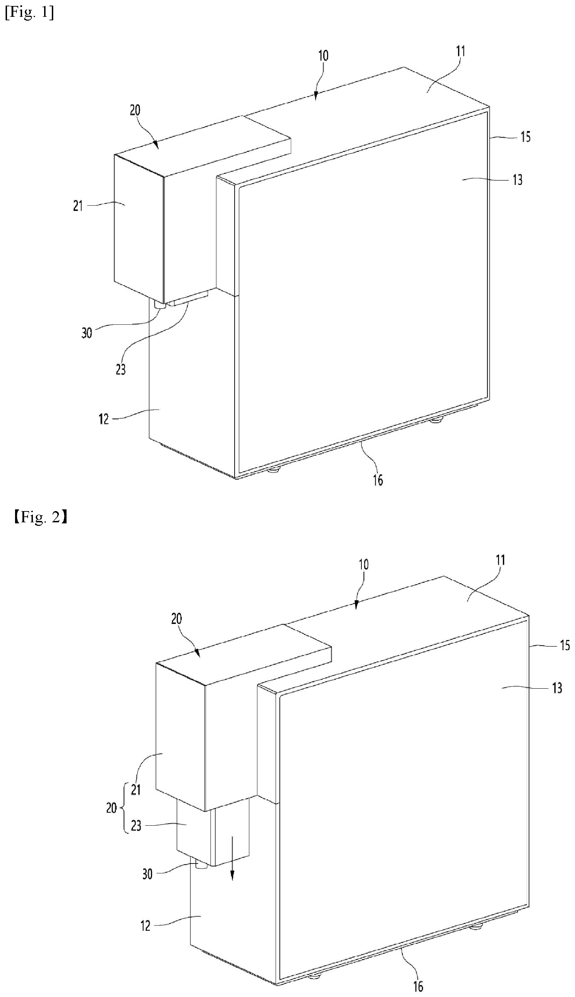

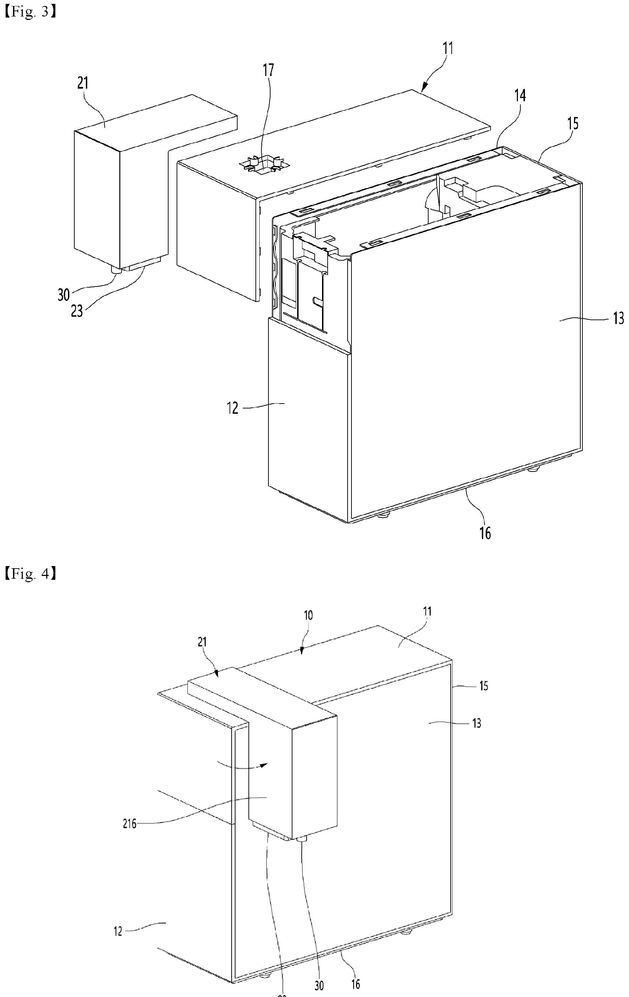

FIG. 1 is a perspective view illustrating a water treatment apparatus according to one embodiment of the present disclosure. In addition, FIG. 2 is a perspective view illustrating a state where the position of the water discharge nozzle of the water treatment apparatus has been changed, in FIG. 1. In addition, FIG. 3 is a perspective view illustrating a state where the fixed cover and top cover are separated, in FIG. 1.

The water treatment apparatus according to the present disclosure is intended to purify water supplied from an external water source and then immediately extract it, or to extract it after cooling or heating it, and may refer to, for example, a direct-flow water purifier.

Here, a direct-flow water purifier refers to a water purifier that does not have a reservoir for storing purified water, but rather a type in which water passes through a filter in real time and purified water is extracted when the user requests purified water extraction.

In addition, the water treatment apparatus according to the present disclosure may refer to a refrigerator having a water purification function. In other words, it may refer to a water purifier refrigerator that is a refrigerator and has a filter for purifying raw water and a water discharge nozzle through which purified water is discharged.

In addition, the water treatment apparatus according to the present disclosure may mean an under-sink type water purifier in which the main body is installed under the sink and the water discharge nozzle is installed on the outside of the sink.

In addition, the water treatment apparatus according to the present disclosure may refer to various types of known apparatus that receive water from a water source, purify it by passing it through a filter, and then supply it to the outside.

Referring to FIGS. 1 to 3, a water treatment apparatus according to one embodiment of the present disclosure includes a main body 10 and a water discharge module 20 coupled to the main body 10 and having a water discharge nozzle 30 mounted at the lower end.

The water discharge module 20 may include a fixed cover 21 and a water discharge nozzle 30. The water discharge module 20 may include a fixed cover 21, an elevating cover 23, and a water discharge nozzle 30.

In addition, the water discharge module 20 may be provided with an elevation structure to adjust the height of the water discharge nozzle 30.

In addition, the water discharge module 20 may be coupled to protrude to the front surface of the main body 10. In addition, the water discharge module 20 may be coupled to protrude to either the left side or the right side of the main body 10.

The water discharge module 20 can be coupled to the upper surface of the main body 10. In addition, the water discharge pipe, the electric wire, or the like, which extends from the inside of the main body 10 and pass through the internal space of the water discharge module 20 and are connected to the water discharge nozzle 30, pass through the opening 17 formed on the upper surface of the main body 10.

The water discharge module 20 can be separably and detachably coupled to the upper surface of the main body 10, and the water discharge module 20 can cover the opening 17.

When the opening 17 is formed on the upper surface of the main body 10 as described above, even when the water discharge module 20 is installed to protrude toward the front of the main body 10 or to protrude toward the side of the main body 10, the front surface or side of the main body 10 is maintained smooth, so that the water treatment apparatus has the advantage of looking clean.

First, the main body 10 may include a top cover 11 forming the upper surface, a front panel 12 forming the front surface, first and second side panels 13, 14 forming both sides, a rear panel 15 forming the rear surface, and a base 16 forming the bottom surface.

Additionally, a filter is disposed inside the main body 10 to introduce water from the outside and filter it into purified water.

On the inside of the main body 10, a filter accommodation groove 18 in which the filter is accommodated is formed concavely toward the rear at a position adjacent to the front panel 12.

In addition, a filter bracket 19 on which a filter is seated is disposed in the filter accommodation groove 18, and a filter socket 100 is mounted on the upper end or the lower end of the filter bracket 19.

Therefore, when the user detaches the front panel 12, the filter accommodation groove 18 and the filter 40 disposed in the filter accommodation groove 18 can be exposed to the outside.

In addition, purified water that has passed through the filter 40 can be supplied to the user through the water discharge nozzle 30. A purified water flow path that guides purified water that has passed through the filter 40 toward the water discharge nozzle 30 can be disposed inside the main body 10.

In addition, purified water passing through the filter 40 can be supplied to the water discharge nozzle 30 in the form of cold water or hot water after being cooled or heated.

To this end, a hot water tank that heats purified water that has passed through the filter 40 and a hot water flow path that guides the heated hot water in the hot water tank toward the water discharge nozzle 30 may be disposed inside the main body 10. For example, the hot water tank can generate hot water by instantaneously heating purified water that has passed through the hot water tank using an induction heating (IH) method.

In addition, the hot water tank may be equipped with a thermoelectric element or a heating wire to heat purified water passing through the hot water tank into hot water.

In addition, instead of the induction heating method, various heating methods can be applied within the range where purified water passing through the hot water tank can be heated into hot water.

In addition, a cooling tank for cooling purified water passing through the filter and a cold water flow path for guiding the cold water cooled in the cooling tank toward the water discharge nozzle 30 may be disposed inside the main body 10. For example, the cooling tank may be equipped with a compressor, an evaporator, a condenser, a cooling fan, or the like, so that purified water passing through the cooling tank can be cooled with cold water. In addition, the cooling tank may be equipped with a thermoelectric element, so that purified water passing through the cooling tank can be cooled with cold water.

In addition, instead of the evaporator, various cooling devices can be applied within the range of being able to cool the purified water passing through the cooling tank with cold water.

In the present disclosure, the height of the water discharge nozzle 30 is variable.

In order to change the height of the water discharge nozzle 30 as described above, the elevating cover 23 can be connected to the fixed cover 21 to perform an elevating operation.

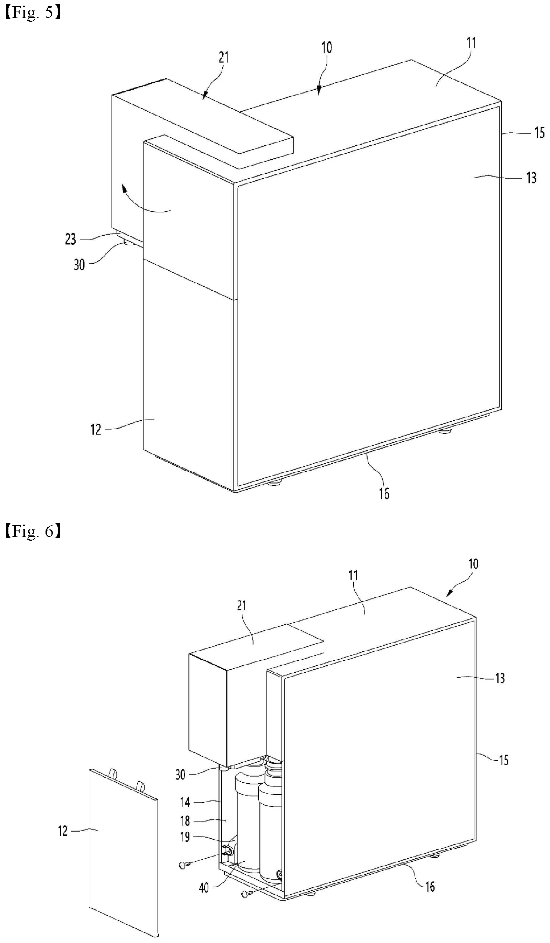

FIG. 4 is a perspective view illustrating a state where the fixed cover is rotated to one side, in FIG. 1. In addition, FIG. 5 is a perspective view illustrating the fixed cover in FIG. 1 rotated to the other side.

Referring to FIGS. 4 and 5, in the present disclosure, the horizontal position of the water discharge nozzle 30 can be changed. In detail, the horizontal positions of the fixed cover 21, the elevating cover 23, and the water discharge nozzle 30 can also be changed.

For example, the horizontal position of the water discharge nozzle 30 can be changed at 90° intervals.

Referring to FIGS. 4 and 5, the fixed cover 21, the elevating cover 23, and the water discharge nozzle 30 may be installed facing one side rather than the front surface, or may be installed facing the other side.

FIG. 6 is a drawing illustrating a state where the front panel is separated, in FIG. 1.

Referring to FIG. 6, the water treatment apparatus of the present disclosure has a filter 40 disposed inside the main body 10.

In addition, when the front panel 12 is separated from the main body 10, the filter 40 is exposed to the outside of the front.

Therefore, when replacing the filter 40, the front panel 12 can be opened, the filter 40 can be separated, and then installed.

In the following description, the filter 40 may mean a state where the filter housing 200 and the filter head 300 are coupled.

Below, the structure of the filter 40 and the installation structure of the filter 40 are described.

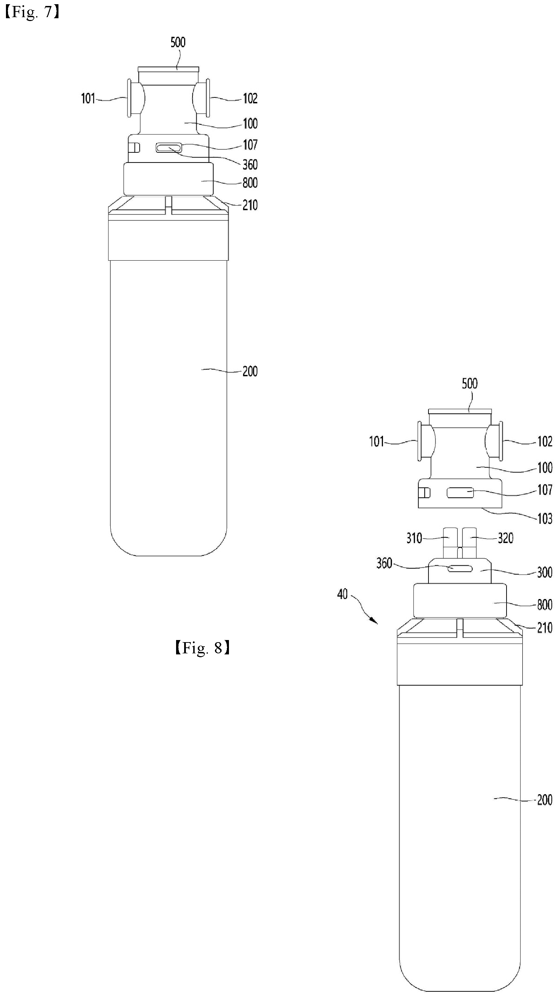

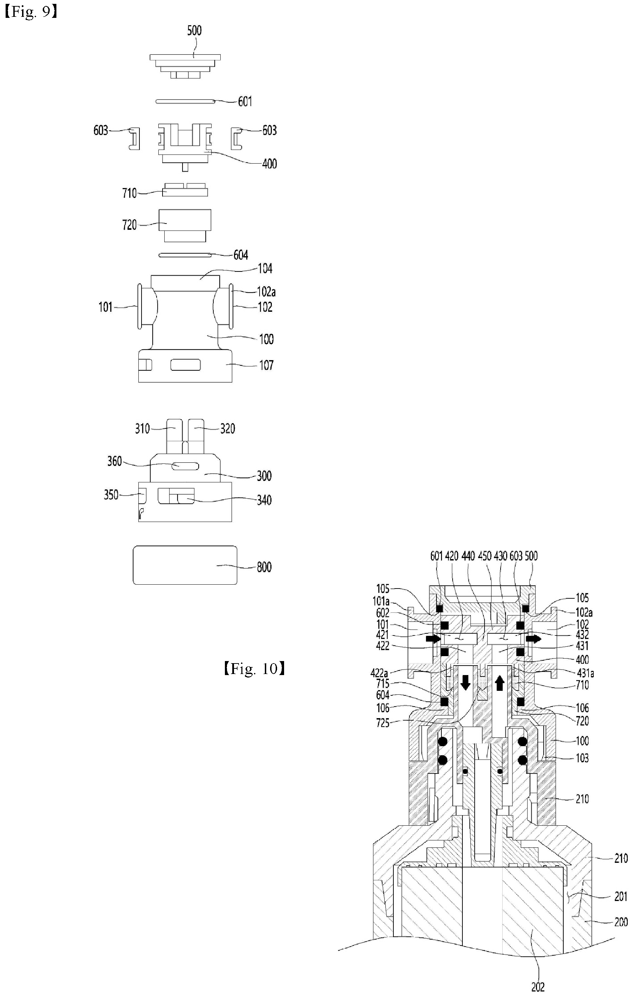

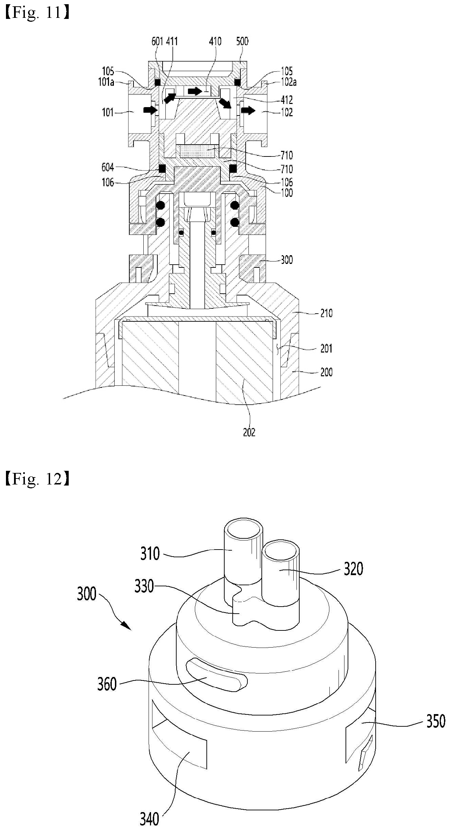

FIG. 7 is a front view illustrating a state where the filter and filter socket, which are components of the present disclosure, are coupled. FIG. 8 is a front view illustrating a state where the filter and filter socket, which are components of the present disclosure, are separated. FIG. 9 is a front view illustrating a state where the filter socket and filter head, which are components of the present disclosure, are separated. FIG. 10 is a cross-sectional view illustrating a state where the filter and the filter socket are coupled in the second state. FIG. 11 is a cross-sectional view illustrating the coupled appearance of the filter and the filter socket in the first state.

Referring to FIGS. 7 to 11, a water treatment apparatus according to an embodiment of the present disclosure includes a filter socket 100 having an introduction port 101 for introducing water on one side in a first direction (left and right direction based on the drawing) and a discharge port 102 for discharging water on the other side, and a filter coupling port 103 formed in a second direction (virtical direction based on the drawing) perpendicular to the first direction; a filter housing 200 forming a filtration space 201 on the inside; a filter head 300 coupled to the open upper side of the filter housing 200 and coupled to the filter coupling port 103 in the second direction; and a flow path switching member 400 accommodated between the introduction port 101 and the discharge port 102 of the filter socket 100 and rotating about the second direction as an axis.

The flow path switching member 400 may include a bypass flow path 410 that guides water introduced into the introduction port 101 to the discharge port 102 in a first state where the filter head 300 is inserted into the filter coupling port 103, a water introduction flow path 420 that guides water introducing into the introduction port 101 toward the filter head 300 and filter housing 200 in a second state rotated by a predetermined angle based on the first state, and a water discharge flow path 430 that guides water in the filter housing 200 and filter head 300 toward the discharge port 102.

The filter housing 200 and the filter head 300 are coupled. In addition, the filter housing 200 and the filter head 300 move together.

For reference, the filter head 300 and the filter housing 200 or the filter head 300 and the filter cap 210 may be formed integrally.

Additionally, the filter head 300 and the filter housing 200 or the filter head 300 and the filter cap 210 may be detachably coupled.

The flow path switching member 400 can be assembled and coupled to the filter socket 100. In addition, the flow path switching member 400 has an overall cylindrical shape and can rotate about the second direction (vertical direction based on the drawing) as an axis in the internal space of the filter socket 100.

For example, the flow path switching member 400 can rotate 90 degrees to one side and then rotate 90 degrees to the other side.

In addition, when the filter head 300 is coupled to the filter socket 100, the filter head 300 and the filter housing 200 rotate together with the flow path switching member 400.

When the filter housing 200 is rotated while the filter head 300 is coupled to the filter socket 100, the filter head 300 and the flow path switching member 400 rotate together. At this time, the filter socket 100 is fixed.

In other words, the filter socket 100 is a fixed body, and the filter housing 200, filter head 300, and flow path switching member 400 can be understood as rotating bodies.

In detail, when the filter head 300 is fitted into the filter socket 100 in a state where the filter socket 100 is not coupled to the filter head 300, the first state (state of FIG. 5) is achieved.

In this first state, water introduced into the introduction port 101 does not flow toward the filter head 300 and filter housing 200, but passes through the bypass flow path 410 and is discharged directly to the discharge port 102.

In other words, in the first state, the introduction port 101 and the discharge port 102 are communicated with both end portions of the bypass flow path 410, so that water introduced into the introduction port 101 flows out through the discharge port 102 without going through a filtration process.

At this time, water passing through the bypass flow path 410 may flow toward the water discharge nozzle. In addition, since water passing through the bypass flow path 410 has not passed through the filter, the water may not be supplied to the water discharge nozzle but may be drained through a separate pipe.

In addition, when the filter housing 200 is rotated 90 degrees to the right (or left) in the first state where the filter head 300 is inserted into the filter coupling port 103, the filter head 300 and the flow path switching member 400 rotate together with the filter housing 200 and switch to the second state (state of FIG. 6). At this time, the filter socket 100 remains fixed.

In this second state, water introduced into the introduction port 101 flows toward the filter head 300 and filter housing 200 through the water introduction flow path 420.

In addition, the water is purified while passing through a filter material 202 such as a carbon block accommodated inside the filter housing 200.

In addition, purified water (purified water) inside the filter housing 200 is discharged to the outside through the filter head 300, and water discharged from the filter head 300 is discharged to the discharge port 102 through the water discharge flow path 430.

In other words, in the second state, water introduced into the introduction port 101 is introduced into the filter housing 200 through the water introduction flow path 420, undergoes a filtration process, and is then discharged to the discharge port 102 through the water discharge flow path 430.

At this time, the water that has passed through the water introduction flow path 420, filter, and water discharge flow path 430 is in a purified state, so it can be supplied to the water discharge nozzle.

As a reference, immediately after replacing the filter, the water that washes the filter while passing through the filter may not be supplied to the water discharge nozzle, but may be drained through a separate pipe.

In addition, once the drainage of the water that washed the filter is complete, the purified water produced thereafter can be supplied to the water discharge nozzle.

In addition, in one embodiment of the present disclosure, the filter head 300 includes a water introduction pipe 310 that extends in the second direction and communicates with the water introduction flow path 420 when the filter head 300 is inserted into the filter coupling port 103, and a water discharge pipe 320 that is formed parallel to the water introduction pipe 310 and communicates with the water discharge flow path 430.

In other words, the filter head 300 may be provided in a nipple type.

In addition, the introduction port 101 may form a flange 101a extending outwardly on the outer peripheral surface of one side through which water is introduced, and the discharge port 102 may form a flange 102a extending outwardly on the outer peripheral surface of the other side through which water is discharged.

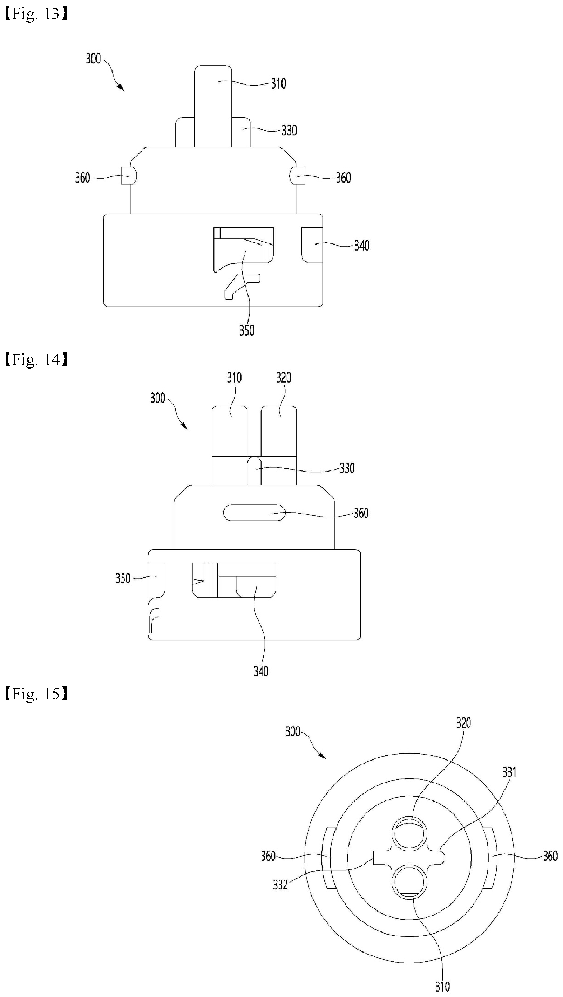

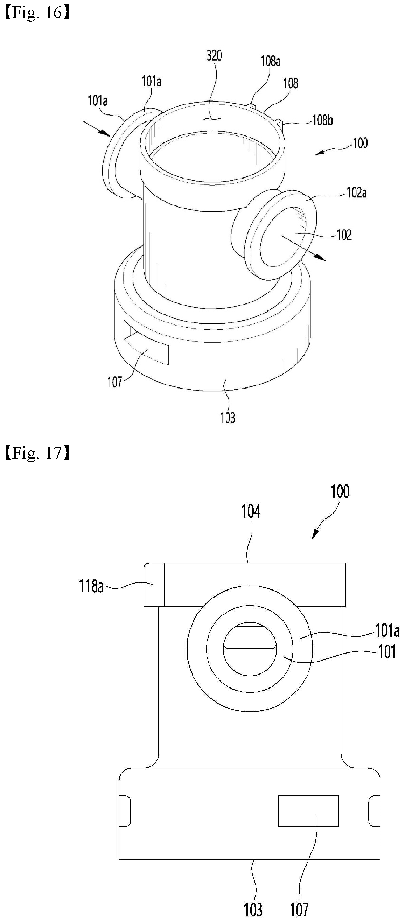

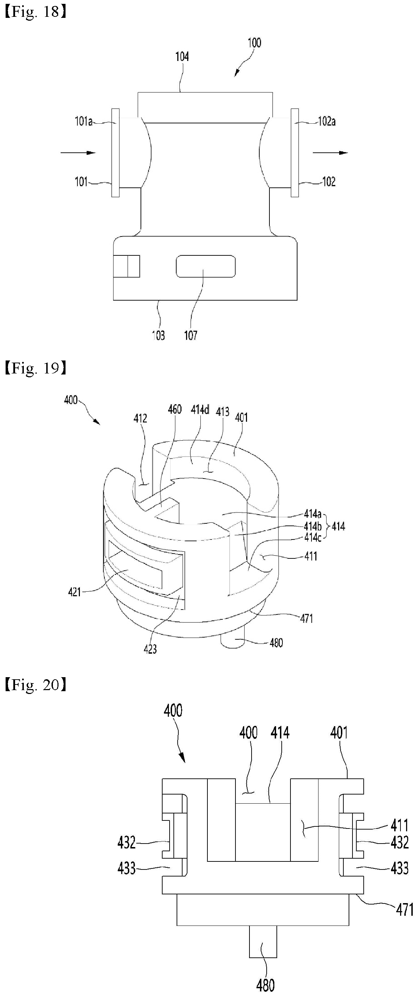

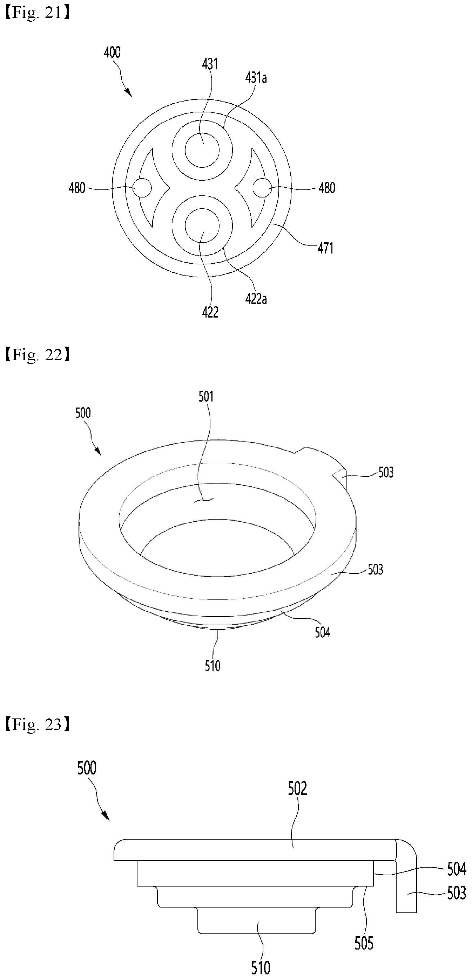

FIG. 12 is a perspective view illustrating a filter head, which is a component of the present disclosure. FIG. 13 is a side view illustrating the filter head. FIG. 14 is a front view illustrating the filter head. FIG. 15 is a plan view illustrating the filter head. FIG. 16 is a perspective view illustrating a filter socket, which is a component of the present disclosure. FIG. 17 is a side view illustrating the filter socket. FIG. 18 is a front view illustrating the filter socket. FIG. 19 is a perspective view illustrating a flow path switching member, which is a component of the present disclosure. FIG. 20 is a side view illustrating the flow path switching member. FIG. 21 is a bottom view illustrating the Flow path switching member.

Referring to the drawing, in the first state before the filter housing 200, filter head 300, and flow path switching member 400 rotate, the extension direction (first direction) of the introduction port 101 and discharge port 102 and the disposition direction of the water introduction pipe 310 and water discharge pipe 320 can cross each other vertically.

On the other hand, in the second state where the filter housing 200, the filter head 300, and the flow path switching member 400 rotate, the extension direction (first direction) of the introduction port 101 and the discharge port 102 and the disposition direction of the water introduction pipe 310 and the water discharge pipe 320 can be formed parallel.

In addition, the water introduction flow path 420 may, in the second state, include a first inlet 421 communicating with the introduction port 101 and a first outlet 422 communicating with the water introduction pipe 310.

The first inlet 421 and the first outlet 422 may be formed in directions intersecting each other. For example, the first inlet 421 may extend in a first direction, and the first outlet 422 may extend in a second direction perpendicular to the first direction.

Referring to the drawing, the first inlet 421 may be formed to extend in the left and right direction and allow water to introduce in from the left side. In addition, the first outlet 422 may be formed to extend in the vertical direction and allow water to discharge downward.

For example, the water introduction flow path 420 may have a ' 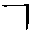 ' or 'T' shape.

At least part of the water introduction flow path 420 may be formed in a straight or curved shape.

In addition, the water discharge flow path 430 may, in the second state, include a second inlet 431 communicating with the water discharge pipe 320 and a second outlet 432 communicating with the discharge port 102.

The second inlet 431 and the second outlet 432 may be formed in a direction that intersects each other.

For example, the second outlet 432 may extend in the first direction, and the second inlet 431 may extend in the second direction perpendicular to the first direction.

Referring to the drawing, the second outlet 432 may be formed to extend in the left and right direction and discharge water to the right. In addition, the second inlet 431 may be formed to extend in the vertical direction and allow water to introduce from the lower side.

For example, the water discharge flow path 430 may have a ' 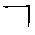 ' or 'T' shape.

At least a portion of the water discharge flow path 430 may be formed in a straight or curved shape.

In addition, the center lines of the first inlet 421 and the second outlet 432 can be positioned in a straight line in the extension direction.

In addition, the first outlet 422 and the second inlet 431 can be positioned parallel to each other.

Additionally, the inner diameter of the introduction port 101 may be formed to become narrower as it approaches the first inlet 421.

The introduction port 101 can be formed so that the inner diameter of one side thereof through which water is introduced is larger than the inner diameter of the other side thereof through which water is discharged.

The introduction port 101 can be formed so that the inner diameter of the other side thereof through which water is discharged is the same as or similar to that of the first inlet 421.

The inner peripheral surface shape of the introduction port 101 on the other side through which water is discharged can be formed in a sloped or stepped shape.

Additionally, the inner diameter of the discharge port 102 may be formed to become narrower as it approaches the second outlet 432.

The discharge port 102 may be formed so that the inner diameter of one side through which water is introduced is smaller than the inner diameter of the other side through which water is discharged.

The discharge port 102 may be formed so that the inner diameter of one side through which water is introduced is the same as or similar to that of the second outlet 432.

The inner peripheral surface shape of the discharge port 102 on one side through which water is introduced may be formed in a sloped or stepped shape.

Meanwhile, the bypass flow path 410 may, in the first state, include a third inlet 411 communicating with the introduction port 101 and a third outlet 412 communicating with the discharge port 102.

In addition, between the third inlet 411 and the third outlet 412, an intermediate flow path 413 that bypasses the water introduction flow path 420 and water discharge flow path 430 can be formed.

The intermediate flow path 413 can be formed to be convex upward.

At least a portion of the intermediate flow path 413 may be formed in a straight or curved shape.

The intermediate flow path 413 is formed to pass through a portion higher than the upper ends of the water introduction flow path 420 and water discharge flow path 430.

For example, at a position where the intermediate flow path 413, the water introduction flow path 420, and the water discharge flow path 430 overlap in the vertical direction, the lower end of the intermediate flow path 413 may be located higher than the upper ends of the water introduction flow path 420 and the water discharge flow path 430.

The bypass flow path 410 can be formed in a form that penetrates the flow path switching member 400.

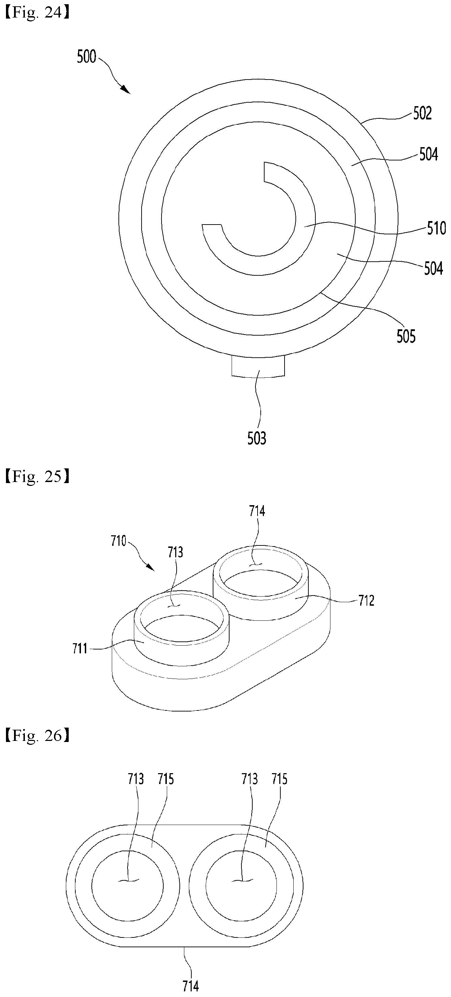

FIG. 22 is a perspective view illustrating the upper cover, which is a component of the present disclosure. FIG. 23 is a side view illustrating the upper cover. FIG. 24 is a bottom view illustrating the upper cover.

Referring to the drawing, the bypass flow path 410 including the intermediate flow path 413 may be defined at least in part by the upper cover 500 described below.

At this time, the flow path switching member 400 forms a bypass groove 414 that is concavely formed from the upper end to the lower end, and the upper cover 500 covers the open upper side of the bypass groove 414, thereby forming a bypass flow path 410.

In other words, the lower end of the bypass flow path 410 may be defined by the flow path switching member 400, and the upper end thereof may be defined by the upper cover 500.

The bypass groove 414 may include a first plane 414a located above the upper ends of the water introduction flow path 420 and water discharge flow path 430, inclined surfaces 414b formed to slope downward on both sides of the first plane 414a, and a second plane 414c extending horizontally from the lower ends of the inclined surfaces 414b on both sides.

In addition, the first plane 414a may be located lower than the upper surface 401 of the flow path switching member 400.

The extension direction of the water introduction flow path 420 and water discharge flow path 430 and the extension direction of the bypass flow path 410 may intersect vertically.

In other words, the virtual line connecting the center of the first inlet 421 and the center of the second outlet 432 and the virtual line connecting the center of the third inlet 411 and the center of the third outlet 412 can intersect vertically.

In addition, the flow path switching member 400 forms an intermediate wall 440 extending vertically to divide the water introduction flow path 420 and water discharge flow path 430, and the bypass flow path 410 can be formed to pass through the upper side of the intermediate wall 440.

In addition, the flow path switching member 400 forms a horizontally extending separation wall 450 to divide the bypass flow path 410, the water introduction flow path 410, and the water discharge flow path 430, and the bypass flow path 410 can be located on the upper side of the separation wall 450.

In addition, the filter socket 100 may further include an upper cover 500 that is open at the upper side to form an upper opening 104 and covers the upper opening 104 of the filter socket 100.

The upper opening 104 is formed in a circular shape, and the upper cover 500 can also be formed in a circular shape.

When the upper opening 104 of the filter socket 100 is formed as described above, the flow path switching member 400 can be inserted into the filter socket 100 through the upper opening 104, thereby improving the convenience of assembly.

At least a portion of the upper cover 500 can be accommodated inside the upper opening 104.

Additionally, at least a portion of the upper cover 500 may be exposed to the outside of the upper opening 104.

The upper cover 500 forms a concave part 501 that is formed concavely from the upper side to the lower side.

In addition, a peripheral part 502 extending horizontally along the perimeter of the concave part 501 is formed.

Additionally, a downwardly extending grip part 503 may be formed on one side of the peripheral part 502.

The flow path switching member 400 forms a gripping groove 108 on the outer peripheral surface of the upper side so that the gripping part 503 is fitted therein. The gripping groove 108 can be understood as a space between a pair of gripping protrusions 108a, 108b that extend vertically on the outer peripheral surface of the upper side of the flow path switching member 400 and are spaced apart from each other in the circumferential direction.

The lower end of the peripheral part 502 can be seated on the upper end of the upper opening 104.

In addition, the upper cover 500 forms an accommodation part 504 that is accommodated in the upper opening 104.

The outer diameter of the accommodation part 504 is formed to be smaller than the outer diameter of the peripheral part 502, and the accommodation part 504 has a shape extending downward from the lower end of the peripheral part 502.

At the lower end of the accommodation part 504, a first step 505 is formed in a shape that is recessed inward along the perimeter.

In addition, the filter socket 100 forms a second step 105 protruding inward along the perimeter on the inner surface where the upper opening 104 is formed.

In addition, a sealing member 601 such as an O-ring is accommodated between the first step 505 and the second step 105.

Accordingly, the space between the upper cover 500 and the upper opening 104 can be sealed by the sealing member 601, and leakage, or the like can be prevented.

As another example, the filter socket 100 may have its upper side shielded without a separate upper cover 500.

Meanwhile, the upper cover 500 may form a rotation limiting protrusion 510 protruding downward on the lower surface, and a stopper 460 may be formed on the upper side of the flow path switching member 400 to be caught and restrained at both end portions of the rotation limiting protrusion 510 when the flow path switching member 400 rotates.

As described above, when the filter socket 100 is fixed, the flow path switching member 400 rotates while being accommodated in the filter socket 100.

For example, the flow path switching member 400 can rotate within a 90-degree rotation range.

As described above, in order to limit the rotation range of the flow path switching member 400, a rotation limiting protrusion 510 is formed on the lower surface of the upper cover 500.

For reference, the upper cover 500 is coupled to the filter socket 100 and remains fixed together with the filter socket 100 when the flow path switching member 400 rotates.

For example, the rotation limiting protrusion 510 may be provided in an arc shape.

The rotation limiting protrusion 510 has a ring shape with the same center as the upper cover 500, and may have a form in which the 90 degree range is deleted.

The rotation limiting protrusion 510 can be formed within a range of 270 degrees.

In addition, the rotational motion of the flow path switching member 400 can be limited between the end portions on both sides of the rotation limiting protrusion 510.

In other words, the rotational motion of the flow path switching member 400 can be limited to a 90 degree range.

The stopper 460 can extend in a direction intersecting with the rotation limiting protrusion 510 so as to be caught and restrained by the rotation limiting protrusion 510.

For example, the stopper 460 may extend in the normal direction of the rotation limiting protrusion 510.

The stopper 460 may be formed to protrude upward from the first plane 414a of the bypass groove 414.

The stopper 460 may be formed to protrude toward the center from the inner surface of the side wall 414d defining the bypass groove 414.

The stopper 460 can be formed so that at least a portion thereof can overlap in the radial direction of the rotation limiting protrusion 510.

In the above case, when the flow path switching member 400 rotates to one side, the rotation range of the flow path switching member 400 may be limited as one side of the stopper 460 comes into contact with one end portion of the rotation limiting protrusion 510.

In addition, in this state, when the flow path switching member 400 rotates to the other side, the rotation range of the flow path switching member 400 may be limited as the other side of the stopper 460 comes into contact with the other end of the rotation limiting protrusion 510.

Additionally, a sealing member 602, 603 for airtightness is provided between the Flow path switching member 400 and the filter socket 100.

In detail, sealing members 602, 603 may be provided on both sides where the first inlet 421 and the second outlet 432 of the flow path switching member 400 are formed.

On both sides of the flow path switching member 400 where the first inlet 421 and the second outlet 432 are formed, a circumferential groove 423, 433 is formed concavely inward along the circumference of the first inlet 421 and the second outlet 432 at a position spaced apart from the first inlet 421 and the second outlet 432, and the sealing members 602, 603 can be fixed by being fitted into the circumferential groove 423, 433, respectively.

In addition, in the second state, when the water in the introduction port 101 flows into the first inlet 421 of the flow path switching member 400, the sealing member 602 ensures airtightness between the introduction port 101 and the first inlet 421, so that the water in the introduction port 101 can flow into the first inlet 421 without leakage.

In addition, in the second state, when water from the second outlet 432 flows to the discharge port 102 of the filter socket 100, airtightness between the second outlet 432 and the discharge port 102 is secured by the sealing member 602, so that water from the second outlet 432 can flow to the discharge port 102 without leakage.

At this time, the first inlet 421 and the second outlet 432 are formed in a circular shape, and the peripheral groove 423, 433 can also be formed in a circular shape. In addition, the sealing member 602, 603 can also be formed in a circular shape to match the shape of the peripheral groove 423, 433.

In addition, the first inlet 421 and the second outlet 432 are formed in a square shape, and the peripheral groove 423, 433 can also be formed in a square shape. In addition, the sealing member 602, 603 can also be formed in a square shape to match the shape of the peripheral groove 423, 433.

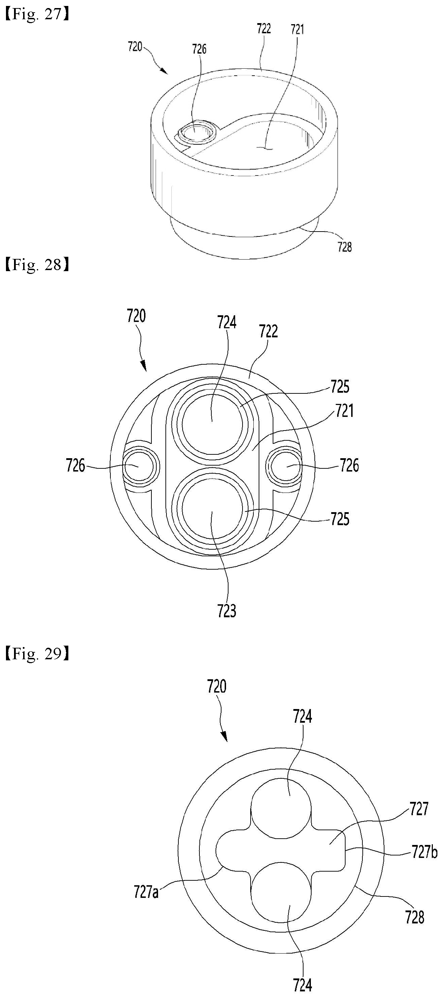

FIG. 25 is a perspective view illustrating the first connection member, which is a component of the present disclosure. FIG. 26 is a bottom view illustrating the first connection member. FIG. 27 is a perspective view illustrating a second connection member, which is a component of the present disclosure. FIG. 28 is a plan view illustrating the second connection member. FIG. 29 is a bottom view illustrating the second connection member.

Referring to the drawing, at least one connection member 710, 720 may be provided between the flow path switching member 400 and the filter socket 100.

The connection member 710, 720 may include a first connection member 710 that connects the water introduction pipe 310 to the water introduction flow path 420 and connects the water discharge pipe 320 to the water discharge flow path 430.

The first connection member 710 can form a first protrusion part 711 and a second protrusion part 712 on the upper side, which are inserted into the water introduction flow path 420 and water discharge flow path 430, respectively.

The first connection member 710 may be provided to maintain a play between the flow path switching member 400 and the filter head 300.

In addition, the first connection member 710 is a gasket or sealing material and may be made of a material such as rubber or silicone.

In addition, the first connection member 710 can have a function of preventing water from leaking between the water introduction pipe 310, the water discharge pipe 320, and the flow path switching member 400.

The first protrusion part 711 is inserted into the first outlet 422 of the water introduction flow path 420.

In addition, the second protrusion part 712 is inserted into the second inlet 431 of the water discharge flow path 430.

At this time, a first extension part 422a and a second extension part 431a having an expanded inner diameter can be formed at the lower end of the first outlet 422 and the lower end of the second inlet 431, respectively, so that the first protrusion part 711 and the second protrusion part 712 can be inserted therein.

In addition, the first connection member 710 can form a first connection port 713 and a second connection port 714 through which the water introduction pipe 310 and water discharge pipe 320 pass, respectively.

At this time, the first connection port 713 may be formed to penetrate the first protrusion part 711, and the second connection port 714 may be formed to penetrate the second protrusion part 712.

In addition, when the first protrusion part 711 is inserted into the first outlet 422 and the second protrusion part 712 is inserted into the second inlet 431, the upper end of the first connection member 710 can contact the lower end of the flow path switching member 400.

In addition, in a state where the first protrusion part 711 is inserted into the first outlet 422 and the second protrusion part 712 is inserted into the second inlet 431, the water introduction pipe 310 can be exposed toward the first outlet 422 of the flow path switching member 400 after passing through the first connection port 713, and the water discharge pipe 320 can be exposed toward the second inlet 431 of the flow path switching member 400 after passing through the second connection port 714.

In addition, the connection member 710, 720 may include a second connection member 720 that secures the first connection member 710 to the flow path switching member 400 and the filter socket 100.

The second connection member 720 may be provided to maintain a play between the flow path switching member 400 and the filter socket 100.

The second connection member 720 may be provided to maintain a play between the first connection member 710 and the filter socket 100.

The second connection member 720 may be provided to maintain a gap between the filter head 300 and the filter socket 100.

In addition, the second connection member 720 may have an accommodation groove 721 into which the first connection member 710 is inserted, which may be formed concavely from the upper side to the lower side.

The shape of the accommodation groove 721 can be formed to be identical to the shape of the first connection member 710.

For example, the accommodation groove 721 and the first connection member 710 may have a shape in which both sides have a semicircular shape and the side surface is formed as a plane.

The second connection member 720 has a circular perimeter and includes an extension wall 722 extending upward along the perimeter.

In addition, the upper end of the extension wall 722 can be fitted between the flow path switching member 400 and the inner surface of the filter socket 100.

In detail, the upper end thereof can be fitted between the inner surface of the filter coupling port 103 of the filter socket 100 and the outer peripheral surface of the flow path switching member 400 to maintain a gap between the filter socket 100 and the flow path switching member 400.

At this time, the flow path switching member 400 may have a third step 471 formed inwardly to be formed concavely along the perimeter on the outer peripheral surface of the lower end.

In addition, the upper end of the extension wall 722 can be fitted into the space provided between the inner side of the filter coupling port 103 and the lower end of the flow path switching member 400 when the third step 471 is formed.

In addition, a third connection port 723 and a fourth connection port 724 through which the water introduction pipe 310 and water discharge pipe 320 pass, respectively, can be formed on the bottom surface of the accommodation groove 721.

Accordingly, the water introduction pipe 310 may be exposed toward the first outlet 422 of the flow path switching member 400 after passing through the third connection port 723 and the first connection port 713 in sequence, and the water discharge pipe 320 may be exposed toward the second inlet 431 of the flow path switching member 400 after passing through the fourth connection port 724 and the second connection port 714 in sequence.

In addition, the first connection member 710 may form at least one first inclined part 715 (see FIG. 10) at the lower end, and the second connection member 720 may form a second inclined part 725 (see FIG. 10) corresponding to the first inclined port 715 at the bottom surface of the accommodation groove 721.

In addition, the first connection member 710 may form at least one groove or protrusion at the lower end, and the second connection member 720 may form a protrusion or groove corresponding to the groove or protrusion at the bottom surface of the accommodation groove 721.

In the above case, the bonding strength of the first connection member 710 and the second connection member 720 is improved, and the horizontal movement of the first connection member 710 or the second connection member 720 can be restricted when the first connection member 710 and the second connection member 720 are coupled.

Additionally, a sealing member 604 for airtightness is provided between the second connection member 720 and the filter socket 100.

In addition, the second connection member 720 may be formed so that the lower end thereof has a smaller diameter than the extension wall 722.

Accordingly, a fourth step 728 can be formed inwardly between the lower end of the second connection member 720 and the extension wall 722.

In addition, the filter socket 100 forms an inner protrusion 106 extending inward along the perimeter on the inner surface of the filter coupling port 103.

In addition, the sealing member 604 is disposed and fixed between the fourth step 728 and the inner protrusion 106, so that airtightness can be secured between the second connection member 720 and the filter socket 100 without leakage.

In addition, the flow path switching member 400 may form a plurality of fixing protrusions 480 protruding downward, and the second connection member 720 may have a plurality of fixing grooves 726 formed concavely from the upper side to the lower side, into which the fixing protrusions 480 are inserted.

For example, the flow path switching member 400 may have a fixing protrusion 480 formed on each of the both lower sides, and the second connection member 720 may have a fixing groove 726 formed on each of the both sides so that the fixing protrusion 480 may be inserted.

At this time, a virtual line connecting the centers of the fixed grooves 726 disposed on both sides and a virtual line connecting the centers of the third connection member 723 and the fourth connection member 724 may intersect vertically.

As described above, when the fixing protrusion 480 and the fixing groove 726 are formed, the coupling force between the flow path switching member 400 and the second connection member 720 can be secured. In addition, the coupling force between the flow path switching member 400 and the second connection member 720 as well as the flow path switching member 400 and the first connection member 710 is secured, so that the flow path switching member 400, the first connection member 710, and the second connection member 720 can form one body. In addition, when the flow path switching member 400 rotates, the first connection member 710 and the second connection member 720 can rotate together with the flow path switching member 400.

In addition, the filter head 300 may form a first coupling part 330 on the upper side thereof, and the second connection member 720 may include a second coupling part 727 on the lower surface that is coupled to the first coupling part 330.

For example, the first coupling part 330 may be formed as a rotation protrusion protruding from the upper side of the filter head 300, and the second coupling part 727 may be formed as a rotating groove into which the rotation protrusion is inserted.

As another example, the second coupling part 727 may be formed as a rotation protrusion protruding from the lower surface of the second connection member 720, and the first coupling part 330 may be formed as a rotating groove into which the rotation protrusion is inserted.

The upper end of the first coupling part 330 may be positioned lower than the upper ends of the water introduction pipe 310 and water discharge pipe 320.

The first coupling part 330 can be formed in a shape that crosses between the water introduction pipe 310 and the water discharge pipe 320.

The first coupling part 330 can be formed to extend in both directions from the lower end of the water introduction pipe 310 and water discharge pipe 320.

For example, the first coupling part 330 and the second coupling part 727 may be provided in a straight line shape.

At this time, the extension direction of the second coupling part 727 can vertically intersect with the virtual line connecting the centers of the third connection part 723 and the fourth connection part 724.

In addition, the extension direction of the first coupling part 330 may vertically intersect with the virtual line connecting the centers of the water introduction pipe 310 and the water discharge pipe 320.

Additionally, the first coupling part 330 and the second coupling part 727 may be provided in a cross shape.

In addition, the first coupling part 330 and the second coupling part 727 can be implemented in various forms within a range in which the second connection member 720 can rotate together when the filter head 300 rotates while the first coupling part 330 is fitted into the second coupling part 727.

Additionally, the second coupling part 727 may be formed to have different shapes or sizes on one side and the other side.

In addition, the first coupling part 330 may also be formed to have different shapes or sizes on both sides in correspondence with the second coupling part 727.

For example, the second coupling part 727 and the first coupling part 330 may have one end portion formed in a curved shape and the other end portion formed in a straight shape.

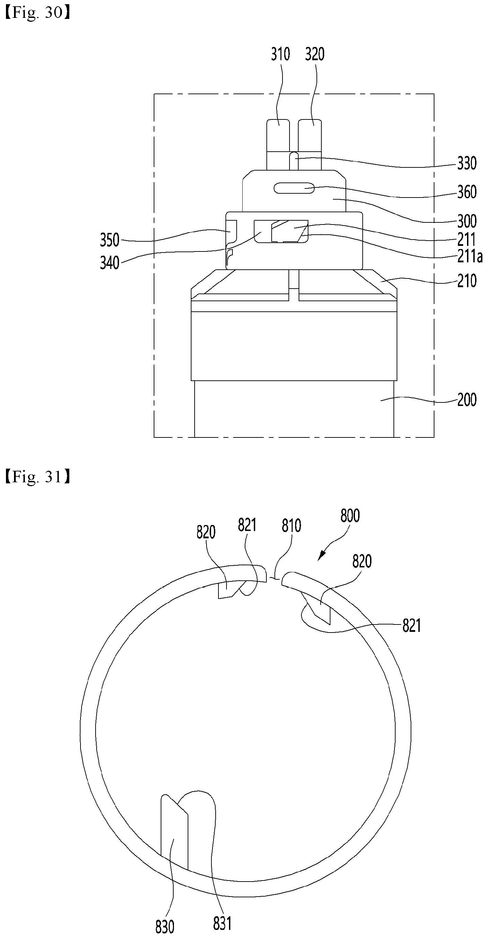

As another example, the second coupling part 727 and the first coupling part 330 may have one end portion 331, 727a (see FIGS. 17 and 31) formed in a semicircle, and the other end portion 332, 727b (see FIGS. 17 and 31) formed in a square.

As another example, a plurality of second coupling parts 727 and a plurality of first coupling parts 330 may be provided, and when the plurality of second coupling parts 727 and the plurality of first coupling parts 330 are provided, they may each be formed in different shapes or sizes.

In the above case, the filter head 300, the second connection member 720, the first connection member 710, and the flow path switching member 400 are coupled while the water introduction pipe 310 and the water discharge pipe 320 pass through the second connection member 720 and the first connection member 710, so that when the filter head 300 rotates, the second connection member 720, the first connection member 710, and the flow path switching member 400 can rotate together.

However, as a load is applied to the water introduction pipe 310 and water discharge pipe 320, there is a risk that the water introduction pipe 310 and water discharge pipe 320 may be deformed or damaged.

On the other hand, if the first coupling part 330 and the second coupling part 727 are formed as described above, when the filter head 300 rotates while the first coupling part 330 is coupled to the second coupling part 272, no load is applied to the water introduction pipe 310 and water discharge pipe 320, and a load is applied to the first coupling part 330, and the second connection member 720 can rotate together with the filter head 300.

Therefore, deformation or damage to the water introduction pipe 310 and water discharge pipe 320 can be prevented.

In addition, as described above, if the first coupling part 330 and the second coupling part 727 are formed asymmetrically or the shapes or sizes of the end portions on both sides of the first coupling part 330 and the second coupling part 727 are formed differently, the filter head 300 can be fitted into the filter socket 100 in the correct direction.

If the first coupling part 330 and the second coupling part 727 are symmetrical or have the same shape at both end portions, it is difficult to recognize even if the filter head 300 is fitted into the filter socket 100 in the opposite direction. In addition, if raw water is introduced in while fitted in the opposite direction, a problem of backflow occurring within the filter housing 200 arises.

On the other hand, if the shapes or sizes of the end portions of the first coupling part 330 and the second coupling part 727 are formed differently, when the filter head 300 is fitted into the filter socket 100 in the opposite direction, it is difficult to be coupled to the first coupling part 330 and the second coupling part 727, and since the user can recognize this, the filter head 300 can be fitted into the filter socket 100 in the correct direction.

In addition, the filter head 300 forms a coupling protrusion 360 protruding outward on the outer peripheral surface.

In addition, the coupling protrusion 360 can be extended by a predetermined length along the perimeter of the filter head 300.

In addition, the filter socket 100 can form a coupling hole 107 at the lower end into which the coupling protrusion 360 is fitted and fixed.

Accordingly, when the coupling protrusion 360 is fitted into the coupling hole 107, the filter head 300 can be coupled to the filter socket 100.

The coupling protrusion 360 can be fixed so as not to shake in the left and right direction and in the vertical direction when fitted into the coupling hole 107.

The coupling protrusions 360 may be provided in multiple numbers spaced apart from each other on the outer peripheral surface of the filter head 300. In addition, the filter socket 100 may be provided with multiple coupling holes 107 corresponding to the coupling protrusions 360.

Additionally, the lower end of the filter coupling port 103 may have a shape with an expanded diameter.

In addition, the filter head 300 may have a shape with a reduced diameter at the upper end.

In addition, the upper end of the filter head 300 with a reduced diameter is inserted into the lower end of the filter coupling port 103 with an expanded diameter.

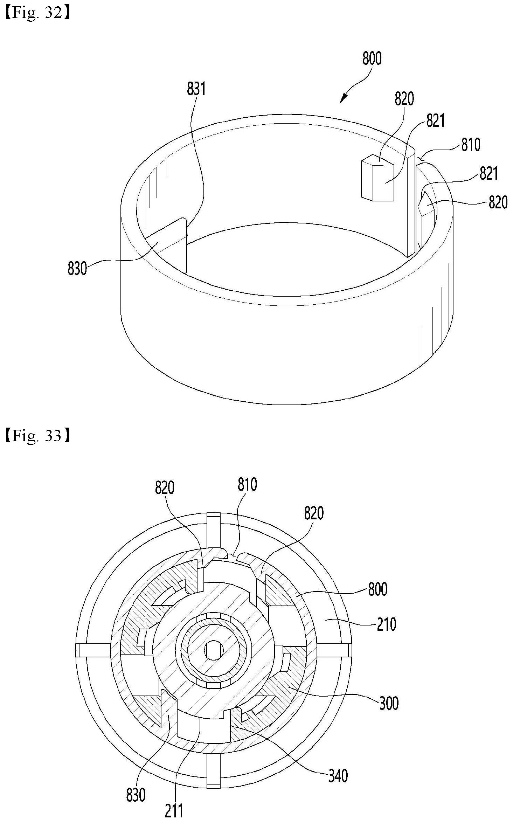

FIG. 30 is a front view illustrating a state where a filter cap and a filter head, which are components of the present disclosure, are coupled. FIG. 31 is a plan view illustrating a fixed cover, which is a component of the present disclosure. FIG. 32 is a perspective view illustrating the fixed cover. FIG. 33 is a cross-sectional view illustrating a state where the fixed cover is coupled with the filter head and filter cap.

Referring to FIGS. 30 to 33, the upper part of the filter housing 200 includes a filter cap 210 that is coupled with the filter head 300, a fastening protrusion 211 is formed on the filter cap 210, and an open through-hole 340 is formed on the filter head 300 so as to confirm the fastening protrusion 211 from the outside.

The fastening protrusion 211 can form an inclined surface 211a on one or the other side.

The inclined surface 211a may be formed at the lower right corner of the fastening protrusion 211 based on the drawing, or may be formed at the upper left corner.

As described above, when the inclined surface 211a is formed, the work of fitting the fastening protrusion 211 into through-hole 340 or separating the fastening protrusion 211 from the through-hole 340 can be carried out more easily.

As described above, when the fastening protrusion 211 is fitted into the through-hole 340, the filter cap 210 is properly connected to the filter head 300.

Accordingly, the user can check the position of the fastening protrusion 211 through the through-hole 340 while the filter cap 210 of the filter housing 200 is fitted to the filter head 300 and whether the filter cap 210 is properly coupled to the filter head 300.

As another example, fastening protrusions 211 may be formed on both sides of the filter cap 210, and through-holes 340 may be formed on both sides of the filter head 300.

Meanwhile, when the filter head 300 and the filter cap 210 are coupled as described above and the filter is stored, transported, or redisposed, there is a risk that the filter head 300 and the filter cap 210 may be separated arbitrarily.

To prevent this, a fixed cover 800 covering the outer peripheral surface of the filter head 300 may be provided when the filter head 300 and the filter cap 210 are coupled.

The fixed cover 800 may have a ring shape.

The fixed cover 800 may have a ring shape with one side open.

The fixed cover 800 can be understood as a configuration that conceals the outer peripheral surface of the filter head 300 while the filter cap 210 is fitted to the filter head 300.

The fixed cover 800 has one side open to form an inlet part 810.

In addition, through the open inlet part 810, a fixed cover 800 is fitted in the form of a clip to cover the outer peripheral surface of the filter head 300. In addition, the outer peripheral surface of the filter head 300 can be covered by the fixed cover 800.

In this state, the fixed cover 800 needs to be fixed to the filter head 300 so that it does not move.

For example, at least one fixed hook 820 protruding inward may be formed on the inner peripheral surface of the fixed cover 800, and a hook groove 350 into which the fixed hook 820 is inserted may be formed in the filter head 300.

The hook groove 350 may be formed concavely inward on the outer peripheral surface of the filter head 300, or may have an open shape penetrating through the outer peripheral surface of the filter head 300.

The fixed hook 820 can be formed adjacent to the inlet part 810.

The fixed hook 820 can be formed at both end portions of the fixed cover 800 defining the inlet part 810 or at a position adjacent to both end portions.

In addition, the fixed hooks 820 can be hooked and restrained at both end portions of the hook groove 350.

The fixed hook 820 can form a downwardly inclined surface 821 in a direction far from the inlet part 810 and in a direction close to the inlet part 810.

When the inclined surface 821 is formed as described above, the filter cap 210 can be more easily fitted to the filter head 300 along the inclined surface 821, and the fixing hook 820 can also be more easily fitted to the hook groove 350.

Additionally, the fixed cover 800 may have a play prevention protrusion 830 formed on the inner peripheral surface extending toward the center.

The play prevention protrusion 830 can be fitted into the through-hole 340.

As described above, the fastening protrusion 211 of the filter cap 210 is fitted into and fixed to the through-hole 340.

In addition, when the fastening protrusion 211 is fitted into the through-hole 340, a play may be created in the circumferential direction between the through-hole 340 and the fastening protrusion 211.

In addition, through this play, the filter cap 210 or filter head 300 may rotate arbitrarily, causing shaking.

The play prevention protrusion 830 can be fixed by being fitted into the play between the through-hole 340 and the fastening protrusion 211. Accordingly, as the play between the through-hole 340 and the fastening protrusion 211 is reduced or eliminated, the state where the filter cap 210 or the filter head 300 is coupled can be firmly maintained.

Additionally, the end portion of the play prevention protrusion 830 can come into contact with the outer peripheral surface of the filter cap 210.

In addition, the end portion of the play prevention protrusion 830 can be formed as an inclined surface 831 or a curved surface so as to stably contact the outer peripheral surface of the filter cap 210.

At this time, the play prevention protrusion 830 may be formed on one side of the fixed cover 800, and the inlet part 810 and the fixed hook 820 may be formed on the opposite side of the play prevention protrusion 830.

In addition, when separating the fixed cover 800 from the filter cap 210 or filter head 300, in order to easily separate the play prevention protrusion 830, the play prevention protrusion 830 may be formed at a position facing the inlet part 810 on the inner surface of the fixed cover 800.

In the above case, since the fixed cover 800 covers the outside of the filter head 300 without shaking when the filter head 300 and the filter cap 210 are coupled, the area of the filter head 300 exposed to the outside is minimized, and the coupled state of the filter head 300 and the filter cap 210 can be firmly maintained.

In addition, during the process of storing and moving the filter, removal of the filter head 300 and the filter cap 210 can be prevented, and during the process of using the filter, removal of the filter head 300 and the filter cap 210 can be prevented, thereby preventing problems such as water leakage.

According to the present disclosure as described above, when installing a filter, the filter can be installed simply by fitting the filter head into the filter socket and turning the filter head to one side, so that installation and replacement of the filter are easy, and the user can install and replace the filter directly.

In addition, when separating the filter, the filter can be separated by simply turning the filter head to the other side and removing the filter head from the filter socket, making it easy to separate and replace the filter, and the user can separate and replace the filter directly.

Above all, when the filter is separated, the flow path inside the filter socket is switched to the bypass mode, so that water introduced into the introduction port of the filter socket flows through the bypass flow path and out the discharge port of the filter socket, which has the advantage of preventing water leakage.

In addition, when the filter is installed in this state, the flow path inside the filter socket is automatically switched to the purification mode, so that water introduced into the introduction port of the filter socket passes through the filter and then flows out through the discharge port of the filter socket, which has the advantage of producing purified water.

According to the present disclosure as described above, the area of the filter flow path exposed to the outside can be minimized during filter storage or filter replacement. Furthermore, by reducing the area of the filter flow path exposed to the outside, external foreign substances are prevented from being introduced the inside of the filter, resulting in the advantage of preventing contamination of the filter.

In addition, the volume of the filter flow path exposed to the outside can be reduced, minimizing the amount of water remaining in the filter flow path, thereby minimizing the occurrence of water stains, sedimentation, or the like.

## Claims

1. A water treatment apparatus comprising:
a filter socket having an introduction port formed on one side, a discharge port formed on the other side relative to a first direction, and a filter coupling port formed in a second direction perpendicular to the first direction;
a filter housing configured to form a filtration space therein;
a filter head coupled to the upper side of the filter housing and inserted into the filter coupling port in the second direction; and
a flow path switching member accommodated between the introduction port and the discharge port of the filter socket and rotating about the second direction as an axis;
wherein the flow path switching member includes
a bypass flow path configured to guide water introduced into the introduction port to the discharge port in a first state where the filter head is inserted into the filter coupling port;
a water introduction flow path configured to guide water introduced into the introduction port to the filter head and a filter housing in a second state where the filter head is rotated by a predetermined angle relative to the first state; and
a water discharge flow path configured to guide water from the filter housing and the filter head to the discharge port.

2. The water treatment apparatus of claim 1, wherein the filter head includes a water introduction pipe extending in the second direction and configured to communicate with the water introduction flow path, and a water discharge pipe extending in the second direction and formed parallel to the water introduction pipe and configured to communicate the water discharge flow path.

3. The water treatment apparatus of claim 2, wherein the water introduction flow path, in the second state,
includes a first inlet configured to communicate with the introduction port and a first outlet configured to communicate with the water introduction pipe, and
wherein the water discharge flow path, in the second state,
includes a second inlet configured to communicate with the water discharge pipe and a second outlet configured to communicate with the discharge port.

4. The water treatment apparatus of claim 3, wherein the first inlet and the first outlet are formed in an intersecting direction, and
wherein the second inlet and the second outlet are also formed in an intersecting direction.

5. The water treatment apparatus of claim 1, wherein the bypass flow path, in the first state, includes a third inlet configured to communicate with the introduction port and a third outlet configured to communicate with the discharge port.

6. The water treatment apparatus of claim 5, wherein an intermediate flow path configured to bypass the water introduction flow path and the water discharge flow path is formed between the third inlet and the third outlet.

7. The water treatment apparatus of claim 1, wherein extension directions of the water introduction flow path and the water discharge flow path and an extension direction of the bypass flow path are perpendicular to each other.

8. The water treatment apparatus of claim 1, wherein the flow path switching member forms an intermediate wall dividing the water introduction flow path and the water discharge flow path, and
wherein the bypass flow path is formed to pass through an upper side of the intermediate wall.

9. The water treatment apparatus of claim 1, wherein the filter socket has an upper opening formed by an open upper side, and wherein the filter socket further includes an upper cover configured to cover the upper opening.

10. The water treatment apparatus of claim 9, wherein the upper cover has a rotation limiting protrusion formed on a lower surface thereof that protrudes downward, and
wherein a stopper is formed on the upper side of the flow path switching member to engage and restrain both end portions of the rotation limiting protrusion when the flow path switching member rotates.

11. The water treatment apparatus of claim 10, wherein the rotation limiting protrusion is provided in an arc shape, and
wherein the rotational motion of the flow path switching member is limited between both end portions of the rotation limiting protrusion.

12. The water treatment apparatus of claim 2, further comprising: a first connection member configured to connect the water introduction pipe to the water introduction flow path and to connect the water discharge pipe to the water discharge flow path, between the flow path switching member and the filter socket.

13. The water treatment apparatus of claim 12, wherein the first connection member has a first protrusion part and a second protrusion part formed on the upper side, each of which are inserted into the water introduction flow path and the water discharge flow path.

14. The water treatment apparatus of claim 12, wherein the first connection member forms a first connection port and a second connection port through which the water introduction pipe and the water discharge pipe pass, respectively.

15. The water treatment apparatus of claim 12, further comprising a second connection member configured to secure the first connection member to the flow path switching member and the filter socket.

16. The water treatment apparatus of claim 15, wherein, in the second connection member, an accommodation groove into which the first connection member is inserted is formed concavely from the upper side to the lower side.

17. The water treatment apparatus of claim 16, wherein a third connection port and a fourth connection port are formed on the bottom surface of the accommodation groove through which the water introduction pipe and the water discharge pipe pass, respectively.

18. The water treatment apparatus of claim 15, wherein the flow path switching member has a plurality of fixing protrusions protruding downward, and wherein the second connection member has a plurality of fixing grooves formed concavely from the upper side to the lower side into which the fixing protrusions are inserted.

19. The water treatment apparatus of claim 15, wherein the filter head forms a rotation protrusion protruding upward, and wherein the second connection member has a groove part formed on a lower surface thereof into which the rotation protrusion is inserted.

20. The water treatment apparatus of claim 1, further comprising: a fixed cover having a ring shape with one side open and covering an outer peripheral surface of the filter head.

21. The water treatment apparatus of claim 20, wherein at least one fixing hook is formed on an inner peripheral surface of the fixing cover, and wherein a hook groove into which the fixing hook is inserted is formed in the filter head.

22. The water treatment apparatus of claim 21, wherein the fixed cover has one side open to form an inlet part, and wherein the fixed hooks are formed at each end portion of the fixed cover defining the inlet part.

23. The water treatment apparatus of claim 21, wherein the fixed hook is hooked and restrained on each side of the hook groove.

24. The water treatment apparatus of claim 20, wherein a filter cap is formed on an upper end of the filter housing, wherein the filter cap has a fastening protrusion formed on the outer peripheral surface, and
wherein the filter head has a through-hole into which the fastening protrusion is fitted.

25. The water treatment apparatus of claim 24, wherein the fixed cover forms a play prevention protrusion extending from the inner peripheral surface.

26. The water treatment apparatus of claim 25, wherein, in a state where the filter cap and filter head are coupled and thus the fastening protrusion is fitted into the through-hole, the play prevention protrusion is fitted into the space between the through-hole and the fastening protrusion.
